# EUROPEAN PATENT SPECIFICATION

(11) **EP 4 234 461 B1**
(45) Date of publication and mention of the grant of the patent: **28.01.2026**
(21) Application number: 21882218.7
(22) Date of filing: 20.10.2021
(51) Int. Cl.: B65G 57/16, B65G 57/03, B65G 59/04, B65G 59/10, B65G 60/00

(54) **AUTOMATIC SYSTEM FOR STACKING AND UNSTACKING TRAYS**
AUTOMATISCHES SYSTEM ZUM STAPELN UND ENTSTAPELN VON SCHALEN
SYSTÈME AUTOMATIQUE POUR EMPILER ET DÉSEMPILER DES PLATEAUX

(30) Priority: 20.10.2020 ES 202031057
(43) Date of publication of application: 30.08.2023
(73) Proprietor: Tecnimusa S.L., 30320 Fuente Alamo (ES)
(72) Inventor: GARCíA LEGAZ, Juan, 30320 Fuente Alamo (Murcia) (ES); POLO MARTINEZ, Pedro Cristobal, 30320 Fuente Alamo (Murcia) (ES); HUERTAS CENEA, Laura Eva, 30320 Fuente Alamo (Murcia) (ES)
(74) Representative: Díaz Pacheco, Maria Desamparados
(86) International application number: PCT/ES2021/070763
(87) International publication number: WO 2022/084568

(56) References cited:
- EP-A1- 3 572 361
- EP-A2- 0 518 180
- ES-A1- 8 601 061
- FR-A1- 2 806 396
- GB-A- 1 569 171
- US-A- 4 009 915
- US-A- 4 070 072
- US-A- 4 566 836
- ROGER MONK: "Tray Of-Stacking/Stacking System", YOUTUBE, 9 May 2018 (2018-05-09), XP055936924, Retrieved from the Internet <URL:https://www.youtube.com/watch?v=ZiD1WZq9AKw> [retrieved on 20211210]

## Description

### OBJECT OF THE INVENTION

The object of the present invention is a system designed to create a continuous flow of trays, unstacking them to introduce them in a system which requires processing them and stacking them again once they have been processed as they exit the system via a conveyor belt.

### BACKGROUND OF THE INVENTION

The health crises caused by the emergence of the Covid-19 virus has led to a growing demand for disinfecting devices for commonly used objects. An important part of known disinfecting devices is based on generating ozone or applying ultraviolet radiation. The properties of both technologies make it possible to ensure correct disinfection of the outer surfaces of various objects or even entire rooms.

In the context of airport facilities, suitably disinfecting the trays commonly used by passengers during routine controls prior to the boarding area is indispensable. To that end, a disinfection tunnel through which the trays arranged on a conveyor belt pass is used nowadays. Disinfecting elements of the desired type, for example ozone or ultraviolet radiation emitters, disinfectant sprayers, or others, are arranged along the tunnel. Therefore, the trays exiting through the outlet end of the tunnel are suitably disinfected and ready to be used by passengers.

A drawback with disinfecting systems is the way in which the trays are collected at the tunnel outlet. Indeed, reaching the tunnel outlet is a continuous flow of disinfected trays that need to be collected, stacked, and transported to where they are used by passengers. These trays can be collected and stacked manually by an operator. However, this implies manual contact of the operator with the trays, which entails an evident risk of contamination. Furthermore, this solution requires an almost full-time dedicated operator for just the task of introducing contaminated trays in the tunnel, as well as collecting and stacking the trays once they are disinfected.

In summary, in this field there is currently the need for a device capable of automatically introducing the trays in the system, as well as collecting and stacking the continuous flow of disinfected trays exiting the system, without the need for manual contact by an operator. EP 3 572 361 A1 discloses an automatic system for stacking and unstacking trays according to the preamble of claim 1.

### DESCRIPTION OF THE INVENTION

The present invention solves the aforementioned problems as a result of an automatic system for unstacking trays to be disinfected and stacking them again once they have been disinfected, in a continuous flow, which not only unstacks and stacks the trays, but rather also has a carriage for introducing the stacks of trays to be disinfected and another carriage to which the trays are transferred once they have been stacked, without the need for contact with a person. Therefore, it is not necessary to have a dedicated operator for this job, and contamination of the trays is furthermore prevented. The task of the operator is limited to introducing a carriage full of trays to be disinfected into the unstacker and collecting the stack of trays already disinfected once the stacker is filled.

Trays are herein referred to at all times as the object to be stacked/unstacked by the automatic system of the invention. However, the concept of the invention can be applied to many other types of objects, such as for example boxes, containers, or others. Therefore, the term *"tray"* must be interpreted in a broad manner, and the field of the invention is not limited to airports, but rather generally includes any industrial process that requires the collecting and stacking of continuously supplied objects. Likewise, the term "stack of trays" must be interpreted as one or more stacks of trays, given that, depending on the flow requirements of trays to be disinfected, the tunnel can have more than one lane of trays and, hence, the unstacker can operate on several stacks of trays simultaneously (one for each infeed lane of the disinfection tunnel) and the stacker can stack trays of one or more lanes simultaneously.

The continuous flow of trays is herein considered to arrive by a conveyor belt coming from a disinfection tunnel. However, the concept of the invention is likewise applicable when the trays arrive in any other way and from any other device different from a disinfection tunnel.

The term *"longitudinal"* will be used herein to refer to the main direction of movement of the trays along the disinfection tunnel and the conveyor belt that receives them.

The present invention describes an automatic system for unstacking trays, automatically feeding a system that requires processing them, and stacking them again at the outlet thereof, as they exit the system in a continuous flow, and fundamentally comprising the following elements: a tray unstacker to feed the inlet of the disinfection tunnel and a tray stacker to collect the trays as they exit the tunnel. As later described, both the tray stacker and the tray unstacker have a vertical movement mechanism to move the stacks of trays upwards or downwards, this mechanism being the same in both cases, but the specific elements for performing the operation of stacking or unstacking trays being added in each case. The tray stacker adds, to said vertical movement mechanism, detecting means specific for being able to reposition at all times the stack of trays such that the trays exiting the tunnel always fall correctly on the upper trays in the stack, and the unstacker includes a movable assembly equipped with suction cups so that when the stack moves upwards, these suction cups can pick up the upper tray of the stack by means of a vacuum, as well as a vibrator which generates vibrations to detach the trays that may be stuck to the one collected by the suction cups (due to the vacuums generated between the trays because they are stacked) in order to assure that the suction cups always collect one and only one tray from the stack each time, thus performing the unstacking task.

### a) Unstacking assembly

The tray unstacker is located next to the inlet end of the disinfection tunnel, for unstacking the trays and introducing them into the tunnel in an automated manner. The unstacker comprises a tray store configured to move vertically upwards and downwards, a roller transport section onto which the trays are unloaded as they are being unstacked and a movable system of suction cups that collects the upper trays from the stacks and releases them onto the roller section generating a continuous flow of trays feeding the disinfection tunnel.

### - Tray store:

The tray store can be implemented in different ways provided that the store can move vertically as described hereinbelow in greater detail. For example, in a preferred embodiment of the invention, the tray store comprises a vertical movement mechanism to move the stack of trays vertically upwards or downwards, to allow the introduction of a carriage full of trays to be disinfected, the removal of the carriage once the stacks of trays have been transferred to the store, etc. More preferably, the vertical movement mechanism comprises:
- A sliding carriage to which the tray stack loader is fixed. The carriage can generally have any shape, and the fixing of the receiver to the sliding carriage can be implemented, for example, by means of a screwed connection or the like.
- A vertical guide to which the sliding carriage is slidingly coupled. The guide can be a vertical rail along which the sliding carriage slides upwards or downwards.
- A toothed belt arranged according to a vertical direction and connected to the sliding carriage to make it move up or down along the vertical guide. The toothed belt can be arranged according to a vertical direction between an upper sheave and a lower sheave, one of them being the driving sheave and the other one being free. The fixing of the sliding carriage to the belt can be implemented in any suitable way known in the art, such as by means of screwing or the like, for example. Therefore, when the drive wheel is actuated, according to the direction of rotation, the sliding carriage ascends or descends along the vertical guide.
- A drive means mechanically connected to the toothed belt to cause the vertical movement thereof. The drive means can generally be of any suitable type, although a geared motor is preferably used. The drive shaft of this geared motor will be connected, directly or indirectly, to the drive wheel, such that the actuation of the geared motor causes the sliding carriage to ascend or descend along the vertical guide.

### - Roller transport:

This is a longitudinally oriented roller conveyor section having an outlet end configured to transfer trays to the disinfection tunnel.

This conveyor is normally horizontal and is arranged at the inlet end of a conveyor belt of the disinfection tunnel. The trays to be disinfected which fall onto the roller transport are thus transferred to the inlet end of the conveyor belt, which takes them to its outlet end so as to be stacked, already disinfected.

### - Movable system of suction cups:

The movable system of suction cups consists of a longitudinally oriented linear actuator to which there is coupled a suction cup assembly (one suction cup assembly per stack) in charge of picking up the trays located in the upper part of the stack by means of a vacuum system. The linear actuator moves the suction cups until placing them on the stack of trays. The tray store moves the stack of trays up until the suction cups contact the upper tray and hold same, moving downwards again to leave the area clear and for the actuator to be able to move the suction cups to the area of the roller conveyor to release the trays thereon, and for said conveyor to transport the trays to the inlet of the tunnel. Before starting the movement, the system checks that the suction cups have picked up only the upper tray of the stack, since small vacuums are formed between the stacked trays which can cause one or more trays to be stuck to the tray held by the suction cups and do not move downwards together with the rest of the trays in the stack when the store starts the downward movement. To prevent these trays from being able to be picked up during movement, or from being able to enter the tunnel overlapping one another, causing jams or preventing them from being correctly disinfected, the unstacker has a mechanism specific for detecting if there are overlapping trays and separating them in such case. This mechanism consists of a vibrator installed on the suction cup assembly, at the end on which they are installed, being in charge of transmitting vibrations to the assembly so as to help remove the vacuum formed between the overlapping trays.

### - First detecting means

The first detecting means is configured to detect that the tray store of the unstacker is in a standby position, which allows the safe movement of the suction cups, either when they are empty or carrying a tray, such that neither the suction cups, nor the tray that they may be transporting, can collide with the stack of trays in the store. In other words, the first detecting means ensures that the tray store is in a suitable position for the suction cups to be positioned on the stack of trays in same or for the suction cups to be removed to the tray unloading position after having picked up the upper tray of the stack.

The first detecting means can, generally, be implemented in different ways provided that it provides the information needed to suitably manage the position of the tray store. For example, in a particularly preferred embodiment of the invention, the first detecting means comprises a presence sensor arranged on one side of the inlet end of the roller transport, oriented horizontally perpendicular to the longitudinal direction. Therefore, when the sensor is detecting a presence, during the downward movement of the tray store, at which time it stops detecting its presence (because it stops detecting the base of the store if it is empty or the upper tray of the stack if it contains trays), the tray store is in a safe standby position, assuring that the suction cup displacer can safely move the suction cup assembly.

The presence sensor can generally be of any type, including infrared, ultrasound, inductive, capacitive, or laser sensors, or generally any type of sensor capable of detecting the presence of the upper tray of the stack and the trays.

### - Second detecting means

The second detecting means is configured to detect the moment in which the tray store of the unstacker is empty.

To that end, in a particularly preferred embodiment of the invention, the second detecting means comprises a presence sensor located below the sensor of the first detecting means, with a vertical separation greater than the height of the base of the store and less than the height of the base plus the height of a tray. Therefore, when the store is in the standby position, with the base of the store (if it is empty) or the last tray of the stack (if it is not empty) below the sensor of the first detecting means, only if the store contains trays will the presence sensor of this second detecting means detect a presence (assuming that the store is not empty), because if the store were empty, the base of the tray store would be below the sensor of the first detecting means and above the sensor of this second detecting means, which is a sign that the tray store is empty.

The presence sensor can generally be of any type, including infrared, ultrasound, inductive, capacitive, or laser sensors, or generally any type of sensor capable of detecting the presence of the base of the tray store or any of the trays in the stack of trays.

### - Third detecting means

The third detecting means is configured to detect if the base of the tray store of the unstacker has reached the lowest possible position, which is a condition necessary to allow the introduction of a carriage full of trays in such a way that the base of the tray store can take with it the stack of trays upon moving upwards, thus completing the transfer of trays from the carriage to the tray store of the unstacker.

The third detecting means can generally be implemented in different ways provided that it provides the information needed to suitably manage the position of the tray store. For example, in a particularly preferred embodiment of the invention, the third detecting means comprises a presence sensor arranged on one side of the guide of the tray store of the unstacker, such that it detects the position of the base of the store. Therefore, when the sensor is detecting the presence of the base, the downward movement of the store is immediately interrupted, being located at the height suitable for introducing the carriage.

The presence sensor can generally be of any type, including infrared, ultrasound, inductive, capacitive, or laser sensors, or generally any type of sensor capable of detecting the presence of the base of the tray store.

### - Fourth detecting means

The fourth detecting means is configured to detect if the base of the tray store of the unstacker has reached the position which allows the same removal of the carriage, once the transfer of trays from the carriage to the unstacker store has been completed, which is a condition necessary to allow the removal of the empty carriage to continue with the process.

The fourth detecting means can generally be implemented in different ways provided that it provides the information needed to suitably manage the position of the tray store. For example, in a particularly preferred embodiment of the invention, the fourth detecting means comprises a presence sensor arranged on one side of the guide of the tray store of the unstacker, such that it detects the position of the base of the store when it has reached the expected position. Therefore, when the sensor is detecting the presence of the base, the upward movement of the store is immediately interrupted, being located at the height suitable for removing the carriage.

The presence sensor can generally be of any type, including infrared, ultrasound, inductive, capacitive, or laser sensors, or generally any type of sensor capable of detecting the presence of the base of the tray store.

### - Fifth detecting means

The fifth detecting means is configured to detect if the tray store has moved up enough for the upper tray of the stack to make contact with the suction cups, such that these suction cups can start the vacuum process to hold the tray.

The fifth detecting means can generally be implemented in different ways provided that it provides the information needed to suitably manage the position of the tray store. For example, in a particularly preferred embodiment of the invention, the fifth detecting means comprises two presence sensors (per stack of trays), arranged on the suction cup assembly of each stack and oriented vertically downwards. One of them will have a detection range such that it only detects the trays when they have reached the position necessary to start the vacuum, at which time the upward movement of the store will be stopped and the vacuum will be started to pick up the upper tray of the stack. The second sensor will have a larger range, such that it detects the tray when it is no longer in contact with the suction cups, so that the unstacker may detect if the tray has been detached and the vacuum has to be shut down to prevent vacuum losses, or if the tray has been released completely onto the roller transport.

The presence sensor can generally be of any type, including infrared, ultrasound, inductive, capacitive, or laser sensors, or generally any type of sensor capable of detecting the presence of trays.

### - Sixth detecting means

The sixth detecting means is configured to detect if the tray store has reached the maximum upward movement limit to prevent the store from being able to damage the suction cup assembly or exceed mechanical limits.

The sixth detecting means can generally be implemented in different ways provided that it provides the information needed to suitably manage the position of the tray store. For example, in a particularly preferred embodiment of the invention, the sixth detecting means comprises a presence sensor arranged on one side of the guide of the tray store of the unstacker, such that it detects the position of the base of the store when it has reached the maximum position allowed during the upward movement. Therefore, when the sensor is detecting the presence of the base, the upward movement of the store is immediately interrupted.

The presence sensor can generally be of any type, including infrared, ultrasound, inductive, capacitive, or laser sensors, or generally any type of sensor capable of detecting the presence of the base of the tray store.

### - Seventh detecting means

The seventh detecting means is configured to detect if the tray held by the suction cups is only one in number or if, when the store moves downwards, there are one or more overlapping trays due to the vacuums formed between stacked trays. In the event that there are several overlapping trays, the system activates the vibrator to detach overlapping trays and make them fall again onto the stack of trays, ensuring that only one tray is going to reach the suction cups.

The seventh detecting means can generally be implemented in different ways provided that it provides the information needed to suitably detect the presence of overlapping trays. For example, in a particularly preferred embodiment of the invention, the seventh detecting means comprises a presence sensor arranged on one side of the guide of the tray store of the unstacker, such that it detects the presence of trays right below the level of the base of the tray once it is held by the suction cups. Therefore, when the store starts the downward movement to the standby position, while the sensor is detecting presence, the system will know that there are overlapping trays and that it can start the vibration mechanism in order to separate them.

The presence sensor can generally be of any type, including infrared, ultrasound, inductive, capacitive, or laser sensors, or generally any type of sensor capable of detecting the presence of trays.

### b) Stacking assembly

The tray stacker is located next to the outlet end of the disinfection tunnel. The stacker comprises a section of conveyor belt placed at the outlet of the tunnel and a tray receiver configured to move vertically downwards as the trays arrive on said belt. A stack of trays in which the upper tray is essentially located at the height of the outlet end of the conveyor belt is thereby formed on said tray receiver.

### - Conveyor belt

This is a longitudinally oriented section of conveyor belt having an inlet end configured to receive the trays.

This conveyor belt is normally horizontal and is arranged at the end of a conveyor belt of the disinfection tunnel. The disinfected trays exiting the disinfection tunnel are thus deposited at the inlet end of the conveyor belt, which takes them to its outlet end so as to be stacked.

### - Tray receiver

The tray receiver can adopt any configuration provided that it provides a support suitable for the trays received from the conveyor belt. For example, in a particularly preferred embodiment of the invention, the tray receiver comprises a pair of parallel and essentially longitudinal supporting bars arranged for supporting the trays. That is, they are two straight longitudinal bars separated by a distance less than the total width of the trays, where said width is interpreted as the transverse dimension with respect to the longitudinal direction along which they move on the conveyor belt. For example, in the specific case of trays of the type used in airports, the distance between the longitudinal bars can be only slightly less than the total width of the trays, such that the peripheral edging that trays usually have are supported on said bars. More specifically, it is a peripheral edging that protrudes out from the upper edge of the trays. The peripheral edging of the trays is thereby supported on the bars, and the bottom of the trays is located at a height that is lower than the bars of the receiver itself.

The tray stacker can be implemented in different ways provided that the tray receiver can move vertically as described hereinbelow in greater detail. For example, in a preferred embodiment of the invention, the stacker comprises a vertical movement mechanism connected to the tray receiver to move said tray receiver vertically downwards as the trays are stacked on same. More preferably, the vertical movement mechanism comprises:
- A sliding carriage to which the tray receiver is fixed. The carriage can generally have any shape, and the fixing of the receiver to the sliding carriage can be implemented, for example, by means of a screwed connection or the like.
- A vertical guide to which the sliding carriage is slidingly coupled. The guide can be a vertical rail along which the sliding carriage slides upwards or downwards.
- A toothed belt arranged according to a vertical direction and connected to the sliding carriage to make it move up or down along the vertical guide. The toothed belt can be arranged according to a vertical direction between an upper sheave and a lower sheave, one of them being the driving sheave and the other one being free. The fixing of the sliding carriage to the belt can be implemented in any suitable way known in the art, such as for example by means of screwing or the like. Therefore, when the drive wheel is actuated, according to the direction of rotation, the sliding carriage ascends or descends along the vertical guide.
- A drive means mechanically connected to the toothed belt to cause the vertical movement thereof. The drive means can generally be of any suitable type, although a geared motor is preferably used. The drive shaft of this geared motor will be connected, directly or indirectly, to the drive wheel, such that the actuation of the geared motor causes the sliding carriage to ascend or descend along the vertical guide.

### - First detecting means

The first detecting means is configured to detect the moment in which the stacker is full or almost full. This can be determined by finding out if the tray receiver is in its lower end position or a position close to same.

To that end, in a particularly preferred embodiment of the invention, the first detecting means comprises a presence sensor configured to detect the tray receiver when it arrives at a lower end position or a position close to same. The presence sensor can generally be of any type, including infrared, ultrasound, inductive, capacitive, or laser sensors, or generally any type of sensor capable of detecting the presence of the tray receiver. For example, when the tray receiver is made of a metallic material, a suitably positioned inductive sensor can be used.

In this context, note that the system of the invention can be configured in two modes.

In a first mode, the presence sensor is located in a position that corresponds to the lower end position of the tray receiver. This position is the lowest possible position that the tray detector can adopt, such that when it arrives at said position, it cannot descend any further distance to receive the next tray. Therefore, when the presence sensor is located in this position, the detection of the tray receiver means the immediate emission of a conveyor belt stop command. The system itself can also send a stop command to the disinfection tunnel to prevent trays from building up at the inlet of the conveyor belt.

In a second mode, the presence sensor is located in a position that corresponds to a position that is slightly higher than the lower end position of the tray receiver. That is, the tray receiver still has room to descend a certain further distance which corresponds to the receiving of a predetermined number of additional trays. In this case, the detection of the tray receiver means the timed emission of the conveyor belt stop command after the passage of a calculated time interval during which the tray receiver continues to receive those trays which are already arranged on the conveyor belt. That is, in this case a disinfection tunnel detection command can be sent immediately, but the conveyor belt continues to work until the trays which were already on the belt have been received in the tray receiver.

### - Second detecting means

The second detecting means is configured to detect that the receiver is in a receiving position in which the upper tray of the stack of trays is essentially at the height of the outlet end of the conveyor belt. In other words, the second detecting means ensures that the tray receiver is in a position suitable for receiving, on the highest tray in the stack of trays, a new tray transported by the conveyor belt.

The second detecting means can generally be implemented in different ways provided that it provides the information needed to suitably manage the position of the tray receiver. For example, in a particularly preferred embodiment of the invention, the second detecting means comprises an upper presence sensor and a lower presence sensor arranged on one side of the outlet end of the conveyor belt and oriented horizontally perpendicular to the longitudinal direction. More specifically, the upper presence sensor is arranged vertically above the lower presence sensor. Therefore, when the tray receiver is in a position suitable for receiving a new tray, the upper presence sensor does not detect anything and the lower presence sensor detects an object, whereas when the tray receiver is in a higher position than the position suitable for receiving due to having just received a new tray and must descend to receive the next one, both first and second presence sensors detect an object.

The upper and lower presence sensors can generally be of any type, including infrared, ultrasound, inductive, capacitive, or laser sensors, or generally any type of sensor capable of detecting the presence of the upper tray of the stack. For example, when the trays are made of a plastic material, a suitably positioned infrared sensor can be used.

### c) - Tray storage carriage

This is a carriage configured both to transfer the stack (or stacks) of trays to the tray store of the unstacker and to receive the trays stacked in the tray receiver of the stacker. This carriage is specially designed to allow a simple transfer of the stacks of trays to the tray store of the unstacker and at the same time to facilitate a user collecting trays from the unstacker.

Therefore, according to a preferred embodiment of the invention, the storage carriage consists of a structure comprising caster wheels and a support for receiving the stack of trays. The support can simply be a flat horizontal plate.

According to another particularly preferred embodiment of the invention, the support is coupled to the structure in a vertically sliding manner, the structure further comprising a spring that continuously drives the support upwards. Therefore, the greater the weight of the trays arranged on the support, the lower the position of the support. For example, the support can be coupled to vertical guides arranged along vertical columns of the structure. The spring can act on the support such that it drives it towards its upper end position located at a height similar to the height of the conveyor belt. Therefore, the weight of the stack of trays supported on the support of the carriage will cause said support to descend further the higher the stack of trays is. The highest tray in the stack of trays will therefore always be at a height where it can be comfortably collected by the user.

According to another more preferred embodiment of the invention, the system further comprises one protective structure equipped with a door to prevent people from accessing the assembly of the unstacker and another protective structure to prevent people from accessing the assembly of the stacker during its operation. Possible accidents caused by improper handling of the system during its operation are thereby prevented.

The operation of this new system for unstacking trays is fundamentally as follows. The system is located at the inlet of a disinfection tunnel such that the outlet end of the roller transport is in a position adjacent to a conveyor of the trays along said disinfection tunnel. The trays that the unstacker releases onto its roller transport are thereby transferred by the latter to the conveyor of the tunnel, which will transport them to the outlet end thereof. The second detecting means determines that the stacker is empty, so the actuation of the vertical movement mechanism is commanded, and the tray store descends to the carriage standby position. When the third detecting means detects that the store has arrived at the position, a light or acoustic signal, or any type of signal that indicates to an operator that they can proceed to introduce the carriage full of trays to transfer them to the unstacker, is then emitted. The operator opens the door of the protective structure, should the system have one, and places the carriage next to the stacker such that the support of the carriage is below the base of the tray store. Then, the tray store moves upwards to the safe carriage removal position. When the fourth detecting means detects that the store has moved upwards to the safe carriage removal position, is emitted a light or acoustic signal, or any type of signal that indicates to an operator that they can proceed to remove the empty carriage. The operator opens the door again and removes the carriage. Once the carriage has been removed, the store of the unstacker moves downwards to the standby position. Once the sensor of the first detecting means detects that the store has reached the standby position, the suction cup displacer moves the suction cup assembly, positioning it on the stacks of trays, at which time the tray store begins to move upwards, until the fifth detecting means detects that they have reached the maximum upward movement position, at which time the suction cups start the vacuum. After a delay sufficient for the suction cups to firmly hold the trays, the tray store starts the downward movement until the first detecting means detects that the store has returned to the standby position, leaving a clear path for the displacer to take the suction cups. If at this time the seventh detecting means detects that the suction cups have held a group of overlapping trays instead of just one, the system activates the tray separation mechanism, consisting of a brief pulse from the vibrator, which generates a shaking that is capable of separating the trays. The system repeats the pulse several times in an attempt to separate the trays. If the trays cannot be separated after several attempts, the suction cups release the trays, which fall again onto the stack of trays, and repeats the cycle of upward movement of the store, the starting of the vacuum to pick up the trays, the return of the store to a standby position, and vibration in the case of detecting overlapping trays. If, after releasing the trays and attempting it again several times, the system continues without being able to separate the trays, a light or acoustic signal, or any type of signal that indicates to an operator that the trays could not be separated is then emitted. If the suction cups have picked up only one tray or if the tray separation mechanism was successful, i.e., the seventh detecting means does not detect presence, the displacer moves the suction cup assembly, positioning it on the roller transport, and the suction cups release the tray. Once the sensor of the fifth detecting means in charge of detecting that the suction cups are no longer in contact with the tray, the displacer moves the suction cups again until placing them on the stacks of suction cups, repeating the tray collection process until the second detecting means detects that the store of the unstacker is empty, at which time the tray store of the unstacker moves downwards to the position for introducing a new tray carriage, and a light or acoustic signal, or any type of signal that indicates to an operator that they must introduce a new tray carriage is then emitted in order to repeat the entire process again.

The operation of the system for stacking trays is fundamentally as follows. The system is located at the outlet of a disinfection tunnel such that the inlet end of the conveyor belt is in a position adjacent to a conveyor of the trays along said disinfection tunnel. The trays exiting the disinfection tunnel are thereby deposited on the inlet end of the conveyor belt, which in turn transports them to the outlet end thereof. The tray receiver of the stacker is located at the outlet of the conveyor belt, such that the first tray is supported on said tray receiver. In the current position of the tray receiver essentially aligned with the conveyor belt, the next tray arriving via the conveyor belt would run into said first tray. The second detecting means then determines that it is necessary to cause the tray receiver to descend a predetermined distance. Therefore, the actuation of the vertical movement mechanism is commanded, and the tray receiver descends said predetermined distance. This process is carried out in the time it takes for the second tray to arrive, which thus falls onto the first tray. This process is repeated a certain number of times until the stacker is full or almost full, i.e., until the tray receiver is in its lower end position or a position close to same. The first detecting means then detects that the tray receiver has arrived at said lower end position or a position close to same and commands the stopping (either immediate or timed stopping, as described above) of the conveyor belt. The vertical movement mechanism is also actuated to cause the tray receiver to ascend to an upper end position. A light or acoustic signal, or any type of signal that indicates to an operator that they can proceed to introduce the carriage to collect the stack of trays is then emitted. The operator opens the door of the protective structure, should the system have one, and places the carriage next to the stacker such that the support of the carriage is below the tray receiver. Then, the tray receiver descends to the lower end position, transferring the trays from the receiver to the support for the carriage. The operator then manually takes the carriage to the tray use position.

### BRIEF DESCRIPTION OF THE FIGURES

Figure 1 shows a view of the system without the storage carriage.
Figures 2a and 2b show two views of the storage carriage, with the support in an upper position and a lower position, respectively.
Figures 3a-3f schematically show different operating steps of the system of the present invention.

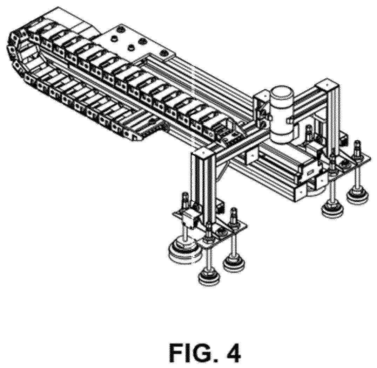

Figure 4 shows a perspective view of the suction cup displacer assembly.

### PREFERRED EMBODIMENT OF THE INVENTION

An example of the system (1) according to the present invention is described below in reference to the attached figures, which show different views of the elements making up the invention.

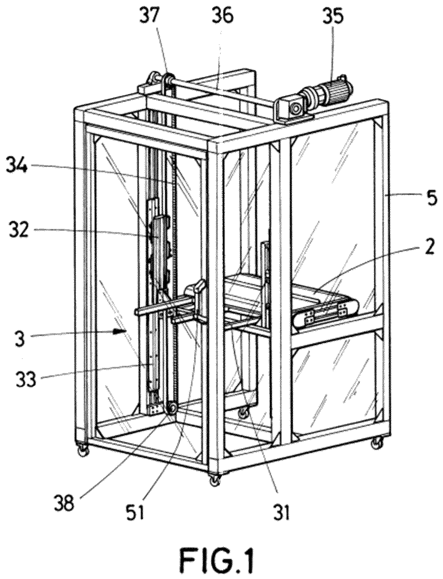

Figure 1 shows a perspective view of the system (1) although without the tray storage carriage (4) for the trays (100). As can be seen, the system (1) comprises a conveyor belt (2) located at the outlet of a disinfection tunnel (not shown), such that it receives a continuous supply of trays (100). The conveyor belt (2) transports said trays (100) from the inlet end to the outlet end thereof, where the tray stacker (3) is located.

The tray stacker (3) consists of a tray receiver (31) fixed to a vertical movement mechanism. The vertical movement mechanism comprises an electric geared motor (35) driving a shaft (36) coupled to a drive wheel (37). A toothed belt (34) is coupled between the drive wheel (37) and a freewheel (38) following a vertical path. A sliding carriage (32) coupled to a vertical guide (33) is fixed to the toothed belt (34). Therefore, when the geared motor (35) is actuated, it moves the belt (34) which, in turn, causes the sliding carriage (32) to ascend or descend a desired distance. Lastly, the tray receiver (31) is fixed to the sliding carriage (32) by means of screws. Therefore, it is possible to move the tray receiver (31) upwards or downwards simply by means of actuating the geared motor (35) in the desired direction.

Though not shown in these figures, the system (1) of the invention further comprises a second detecting means configured to detect if the tray (100) of the stack of trays (100) is essentially at the height of the outlet end of the conveyor belt (2). This position is referred to as the "receiving position", since the system (1) is prepared to receive a new tray (100) on the last tray (100) deposited on the tray receiver (31). In this example, the second detecting means detects if the tray receiver (31) is in this "receiving position" by means of two sensors: an upper presence sensor and a lower presence sensor. These two sensors are arranged on one side of the outlet end of the conveyor belt (2) and oriented horizontally perpendicular to the longitudinal direction. More specifically, the presence sensor and the lower presence sensor are vertically aligned, one above the other. Therefore, when the upper presence sensor does not detect anything and the lower presence sensor detects an object, it is deduced that the tray receiver (31) is in a position which allows a new tray (100) to be received. In contrast, when both first and second presence sensors detect an object, it is deduced that the tray receiver is in a higher position than the receiving position due to having just received a new tray. Therefore, in this second case the vertical movement mechanism is commanded to cause the tray receiver (31) to descend.

Nor do the figures show a first detecting means configured to detect the moment in which the stacker (3) is full or almost full. This first detecting means is located next to a lower end position of the tray receiver (31) or a position close to same, such that it detects when the tray receiver (31) reaches said position.

Figure 1 also shows a protective structure (5) consisting of a frame of pillars and crosspieces which is equipped with glass walls that prevent any person from being able to access the area where the stacker (3) is located, thus preventing accidents. This protective structure (5) has a door (51) which can only be opened at those times when the action of an operator is needed, such as to introduce the tray storage carriage (4), for example, when a stack of trays (100) built up in the stacker (3) is to be taken out.

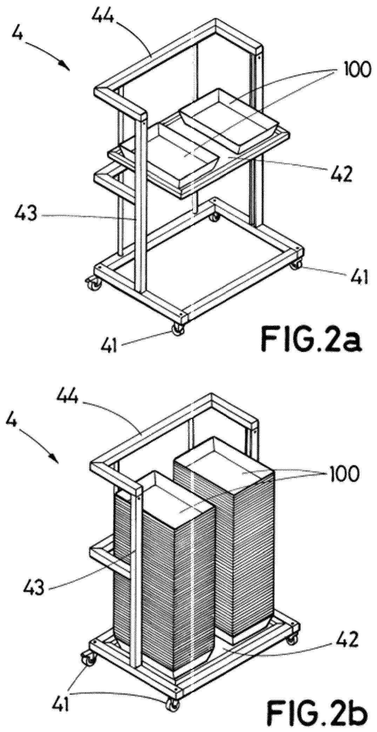

Figures 2a and 2b show two views of the tray storage carriage (4) where its most relevant constituent elements can be seen. As can be seen, the carriage (4) consists of a structure of normally metallic rigid bars which travels on wheels (41). A support (42) in the form of a flat horizontal plate on which the trays (100) are arranged is slidingly connected to vertical bars (43) of the structure, such that it can slide vertically between an upper position shown in Figure 2a to a lower position shown in Figure 2b. Furthermore, the sliding mechanism (not shown in the figures) comprises a spring which tends to drive the support (42) upwards at all times. The characteristics of this spring are selected such that the weight of a support (42) loaded with only a small number of trays (100) is hardly sufficient to compress the spring, and therefore the support (42) is located close to the upper position of Figure 2a for a user to be able to pick up the first tray (100) without the need to bend down. As the weight on the support (4) is increased due to the build-up of a larger number of trays, the spring is gradually further compressed, such that the upper tray (100) of the stack is always kept in a raised position close to the initial position of the tray (42). Therefore, it is ensured that the user always has the first tray (100) of the stack in a readily accessible position without the need to bend down. The storage carriage (4) furthermore has a horizontal bar (44) in its rear upper part so that an operator can readily move it.

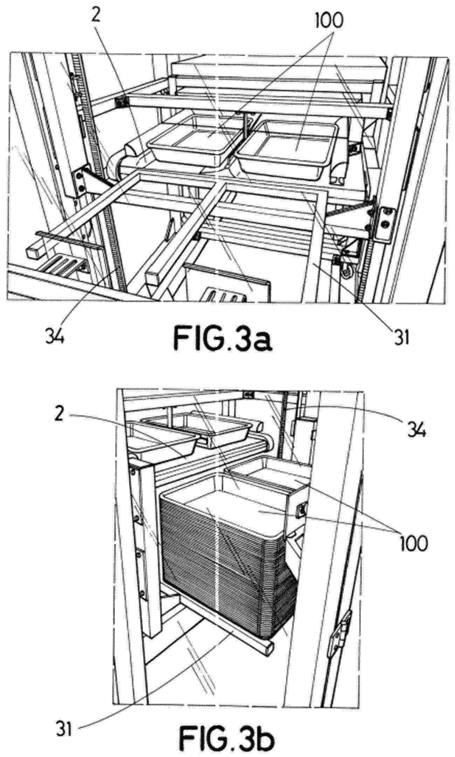

Lastly, Figures 3a-3g show different operating steps of the system (1) of the present invention. In particular, Figure 3a shows an initial moment in which the receiver (31) is in its highest receiving position, ready to pick up the first trays (100) arriving via the conveyor belt (2). In this position, the upper presence sensor does not detect anything, whereas the lower presence sensor detects the receiver itself (31), thus deducing that the receiver (31) is indeed in its receiving position. Once the first two trays (100) are supported on the horizontal bars of the receiver (31), they are detected by the upper presence sensor due to the small vertical distance by which they protrude above the receiver (31). Then, the geared motor (35) is actuated to cause the receiver (31) to move downwards until the upper presence sensor does not detect anything again. Logically, this distance will be equivalent to the distance by which the trays (100) protruded above the receiver (31). The receiver (31) is therefore in the receiving position again, ready to receive two new trays (100).

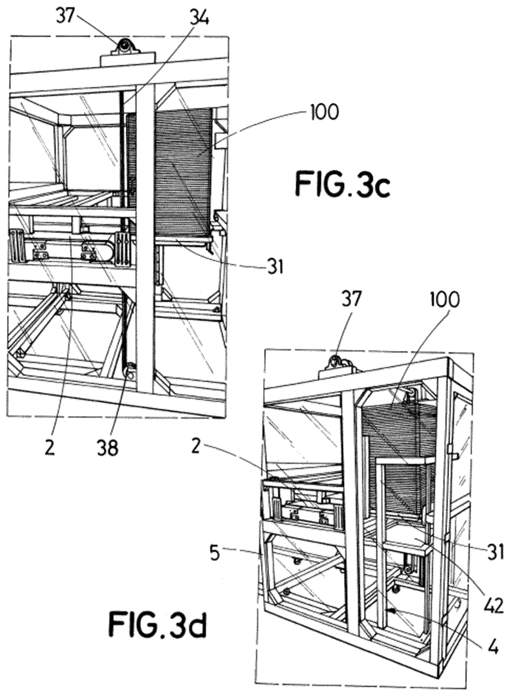

This operation is repeated a plurality of times, and the receiver (31) descends a small distance each time. Figure 3b shows an initial moment in which the receiver (31) is halfway along its complete path to its lower end position. Finally, there is a state in which the first detecting means detects that the receiver has arrived at said lower end position, or a position close to same. In the first case, the conveyor belt (2) and the mechanism for the ascent/descent of the receiver (31) are immediately commanded to stop. In the second case, trays (100) continue to be unloaded only during the time interval needed to empty the conveyor belt (2) of the trays (100) present on same at that time. Next, the geared motor (35) is actuated to cause the receiver (31) to ascend to its highest position again, which position is shown in Figure 3c.

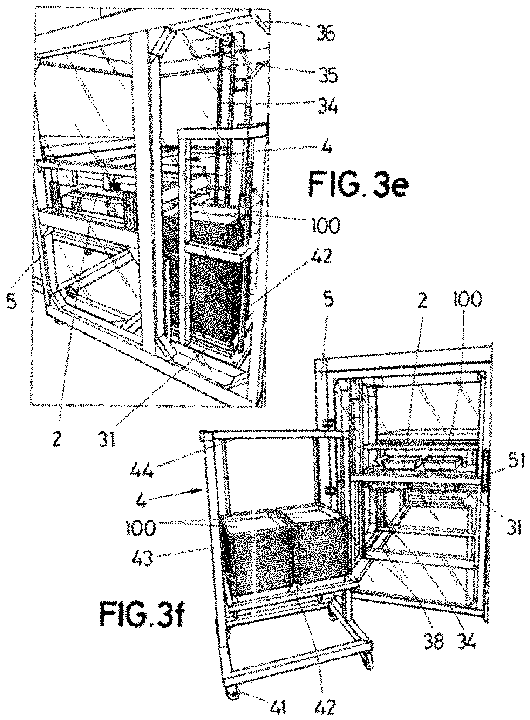

Once in this position, an operator opens the door (51) of the protective structure (50) and introduces the carriage (4) such that, as shown in Figure 3d, the support (42) is located below the receiver (31). Next, the receiver (31) is commanded to descend such that, since the receiver (31) is designed to grab the trays (100) by their upper edge, the trays are supported on the support (42) of the carriage (4). As a consequence, the support (42) descends to its lowest position as the receiver (31) descends as well. Figure 3e shows the moment in which the receiver (31) has arrived at a lower position corresponding to the lowest position of the support (42) of the carriage (4), such that the trays (100) are supported on the support (42) of the carriage (4). An operator can then take the carriage (4) out by pulling on it to take it out of the protective structure (50). As shown in Figure 3f, the trays (100) have been stored on the support (42) of the carriage (4) without requiring the operator to touch them.

## Claims

1. An automatic system (1) for stacking and unstacking trays received in a continuous flow, comprising:
a) A stacking assembly comprising:
- a longitudinally oriented conveyor belt (2) having an inlet end configured to receive the trays (100);
- a tray stacker (3) located next to an outlet end of the conveyor belt (2) for receiving the trays (100), wherein the stacker (3) comprises a tray receiver (31) configured to move vertically downwards as the trays (100) arrive, such that formed thereon there is a stack in which an upper tray is essentially located at the height of the outlet end of the conveyor belt (2);
- a first detecting means configured to detect the moment in which the stacker (3) is full or almost full;
- a second detecting means configured to detect that the receiver (31) is in a receiving position in which the upper tray of the stack of trays (100) is essentially at the height of the outlet end of the conveyor belt (2); and
- a tray storage carriage (4) configured to receive the trays (100) stacked in the tray receiver (31); **characterised by**
b) An unstacking assembly comprising:
- a tray store that moves vertically;
- a roller transport section onto which the trays are unloaded;
- a movable system of suction cups that collects the trays;
- a first detecting means configured to detect that the tray store of the unstacker is in the standby position;
- a second detecting means configured to detect the moment in which the tray store of the unstacker is empty;
- a third detecting means configured to detect if the base of the tray store of the unstacker has reached the lowest possible position;
- a fourth detecting means configured to detect if the base of the tray store of the unstacker has reached the position which allows the removal of the carriage;
- a fifth detecting means configured to detect if the tray store has moved up enough for the upper tray of the stack to make contact with the suction cups;
- a sixth detecting means configured to detect if the tray store has reached the maximum upward movement limit;
- a seventh detecting means configured to detect if the tray held by the suction cups is only one in number; and
- a vibrator configured to detach overlapping trays.

2. The system (1) according to claim 1, comprising a vertical movement mechanism to move the stacks of trays upwards or downwards.

3. The system (1) according to claim 2, wherein the vertical movement mechanism comprises:
- a sliding carriage (32) to which the tray receiver (31) and the tray stack loader are fixed;
- a vertical guide (33) to which the sliding carriage (32) is slidingly coupled;
- a toothed belt (34) arranged vertically and connected to the sliding carriage (32) to make it move up or down along the vertical guide (33); and
- a drive means (35) mechanically connected to the toothed belt (34) to cause the vertical movement thereof.

4. The system (1) according to any of claims 1-3, wherein the tray receiver (31) comprises a pair of parallel and essentially longitudinal supporting bars arranged for supporting the trays (100).

5. The system (1) according to any of claims 3-4, wherein the second detecting means of the stacking assembly comprises an upper presence sensor and a lower presence sensor arranged on one side of the outlet end of the conveyor belt (2) and oriented horizontally perpendicular to the longitudinal direction, with the upper presence sensor being arranged vertically above the lower presence sensor, such that when the tray receiver (31) is in a receiving position to receive a new tray (100), the upper presence sensor does not detect anything and the lower presence sensor detects an object, whereas when the tray receiver (31) is in a higher position than the receiving position due to having just received a new tray (100) and must descend to receive the next one, both first and second presence sensors detect an object.

6. The system (1) according to any of the preceding claims, wherein the first detecting means of the stacking assembly comprises a presence sensor configured to detect the tray receiver (31) when it arrives at a lower end position or a position close to same.

7. The system (1) according to any of the preceding claims, wherein the storage carriage (4) of the stacking assembly consists of a structure comprising caster wheels (41) and a support (42) for receiving the stack of trays (100).

8. The system (1) according to claim 7, wherein the support (42) is coupled to the structure in a vertically sliding manner, the structure further comprising a spring that continuously drives the support (42) upwards, such that the greater the weight of the trays (100) arranged on the support (42), the lower the position of the support (42).

9. The system (1) according to any of the preceding claims, further comprising a protective structure (5) equipped with a door (51) arranged to prevent people from accessing the conveyor belt (2) and the stacker (3) during their operation.

10. The system (1) according to claim 1, wherein the movable system of suction cups comprises a linear actuator to which there is coupled a suction cup assembly in charge of picking up the trays located in the upper part of the stack by means of a vacuum system.

11. The system (1) according to claim 1, wherein the unstacking assembly comprises a vibrator installed on the suction cup assembly to remove the vacuum formed between the trays.

12. The system (1) according to claim 1, wherein the first detecting means of the unstacking assembly comprises a presence sensor arranged at the inlet end of the transport of the unstacker.

13. The system (1) according to claim 1, wherein the second detecting means of the unstacking assembly comprises a presence sensor located below the sensor of the first detecting means.

14. The system (1) according to claim 1, wherein the third, fourth, sixth, and seventh detecting means of the unstacking assembly each comprises a presence sensor located on one side of the guide of the tray store.

15. The system (1) according to claim 1 wherein the fifth detecting means comprises two presence sensors located on the suction cup assembly of each stack.

## Patentansprüche

1. Automatisches System (1) zum Stapeln und Entstapeln von Schalen empfangen in einem kontinuierlichen Fluss, umfassend:
a) eine Stapelbaugruppe, welche Folgendes umfasst:
- ein länglich orientiertes Förderband (2) aufweisend ein Eingangsende, welches dazu ausgebildet ist, die Schalen (100) zu empfangen;
- einen Schalenstapler (3), welcher sich neben einem Ausgangsende des Förderbandes (2) befindet, um die Schalen (100) zu empfangen, wobei der Stapler (3) einen Schalenempfänger (31), welcher dazu ausgebildet ist, sich vertikal abwärts zu bewegen, als die Schalen (100) ankommen, umfasst, sodass darauf ein Stapel gebildet ist, in welchem sich eine obere Schale im Wesentlichen auf der Höhe des Ausgangsendes des Förderbandes (2) befindet;
- ein erstes Detektionsmittel, welches dazu ausgebildet ist, den Zeitpunkt zu detektieren, in welchem der Stapler (3) voll oder fast voll ist;
- ein zweites Detektionsmittel, welches dazu ausgebildet ist, zu detektieren, dass der Empfänger (31) in einer Empfangsstellung ist, in welcher die obere Schale des Stapels von Schalen (100) im Wesentlichen auf der Höhe des Ausgangsendes des Förderbandes (2) ist;
- einen Schalenlagerwagen (4), welcher dazu ausgebildet ist, die im Schalenempfänger (31) gestapelten Schalen (100) zu empfangen;
**gekennzeichnet durch**
b) eine Entstapelbaugruppe, welche Folgendes umfasst:
- ein Schalenlager, welches sich vertikal bewegt;
- einen Rollentransportabschnitt, auf welchen die Schalen entladen werden;
- ein bewegliches System von Saugnäpfen, welches die Schalen erfasst;
- ein erstes Detektionsmittel, welches dazu ausgebildet ist, zu detektieren, dass das Schalenlager des Entstaplers in der Wartestellung ist;
- ein zweites Detektionsmittel, welches dazu ausgebildet ist, den Zeitpunkt zu detektieren, in welchem das Schalenlager des Entstaplers leer ist;
- ein drittes Detektionsmittel, welches dazu ausgebildet ist, zu detektieren, ob die Basis des Schalenlagers des Entstaplers die niedrigstmögliche Stellung erreicht hat;
- ein viertes Detektionsmittel, welches dazu ausgebildet ist, zu detektieren, ob die Basis des Schalenlagers des Entstaplers die Stellung erreicht hat, welche die Entnahme des Wagens erlaubt;
- ein fünftes Detektionsmittel, welches dazu ausgebildet ist, zu detektieren, ob sich das Schalenlager genug nach oben bewegt hat, damit die obere Schale des Stapels mit den Saugnäpfen in Kontakt kommt;
- ein sechstes Detektionsmittel, welches dazu ausgebildet ist, zu detektieren, ob das Schalenlager die maximale Aufwärtsbewegungsgrenze erreicht hat;
- ein siebtes Detektionsmittel, welches dazu ausgebildet ist, zu detektieren, ob die von den Saugnäpfen gehaltene Schale nur einzeln ist; und
- einen Vibrator, welcher dazu ausgebildet ist, sich überlappende Schalen abzulösen.

2. System (1) nach Anspruch 1, umfassend einen vertikalen Bewegungsmechanismus, die Stapel von Schalen aufwärts oder abwärts zu bewegen.

3. System (1) nach Anspruch 2, wobei der vertikale Bewegungsmechanismus Folgendes umfasst:
- einen Gleitwagen (32), an welchem der Schalenempfänger (31) und der Schalenstapellader fixiert sind;
- eine vertikale Führung (33), mit welcher der Gleitwagen (32) gleitend gekoppelt ist;
- einen Zahnriemen (34), welcher vertikal angeordnet ist und mit dem Gleitwagen (32) verbunden ist, um ihn nach oben oder nach unten entlang der vertikalen Führung (33) zu bewegen; und
- ein Antriebsmittel (35), welches mit dem Zahnriemen (34) mechanisch verbunden ist, um die vertikale Bewegung desselben zu bewirken.

4. System (1) nach einem der Ansprüche 1-3, wobei der Schalenempfänger (31) ein Paar parallele und im Wesentlichen längliche Stützstangen, welche zum Stützen der Schalen (100) angeordnet sind, umfasst.

5. System (1) nach einem der Ansprüche 3-4, wobei das zweite Detektionsmittel der Stapelbaugruppe einen oberen Anwesenheitssensor und einen unteren Anwesenheitssensor umfasst, welche auf einer Seite des Ausgangsendes des Förderbandes (2) angeordnet sind und horizontal senkrecht zur Längsrichtung orientiert sind, wobei der obere Anwesenheitssensor vertikal über dem unteren Anwesenheitssensor angeordnet ist, sodass, wenn der Schalenempfänger (31) in einer Empfangsstellung ist, um eine neue Schale (100) zu empfangen, der obere Anwesenheitssensor nichts detektiert und der untere Anwesenheitssensor ein Objekt detektiert, während, wenn der Schalenempfänger (31) auf einer höheren Stellung als die Empfangsstellung ist, weil er gerade eine neue Schale (100) empfangen hat und heruntergehen muss, um die nächste zu empfangen, sowohl der erste Anwesenheitssensor als auch der zweite Anwesenheitssensor ein Objekt detektieren.

6. System (1) nach einem der vorhergehenden Ansprüche, wobei das erste Detektionsmittel der Stapelbaugruppe einen Anwesenheitssensor umfasst, welcher dazu ausgebildet ist, den Schalenempfänger (31) zu detektieren, wenn er an einer unteren Endstellung oder einer Stellung nah daran ankommt.

7. System (1) nach einem der vorhergehenden Ansprüche, wobei der Lagerwagen (4) der Stapelbaugruppe aus einer Struktur besteht, welche Lenkrollen (41) und eine Stütze (42) zum Empfangen des Stapels von Schalen (100) umfasst.

8. System (1) nach Anspruch 7, wobei die Stütze (42) mit der Struktur auf eine vertikal gleitende Weise gekoppelt ist, wobei die Struktur zusätzlich eine Feder umfasst, welche die Stütze (42) kontinuierlich aufwärts antreibt, sodass je größer das Gewicht der auf der Stütze (42) angeordneten Schalen (100), desto niedriger die Stellung der Stütze (42) ist.

9. System (1) nach einem der vorhergehenden Ansprüche, zusätzlich umfassend eine Schutzstruktur (5), welche mit einer Tür (51) ausgerüstet ist, welche dafür angeordnet ist, zu verhindern, dass Menschen Zugang zum Förderband (2) und zum Stapler (3) während des Betriebs derselben haben.

10. System (1) nach Anspruch 1, wobei das bewegliche System von Saugnäpfen ein lineares Stellglied umfasst, mit welchem eine Saugnäpfenbaugruppe gekoppelt ist, welche für das Abheben der Schalen, welche sich im oberen Teil des Stapels befinden, mittels eines Vakuumsystems zuständig ist.

11. System (1) nach Anspruch 1, wobei die Entstapelbaugruppe einen Vibrator umfasst, welcher in der Saugnäpfenbaugruppe installiert ist, um das zwischen den Schalen gebildete Vakuum zu beseitigen.

12. System (1) nach Anspruch 1, wobei das erste Detektionsmittel der Entstapelbaugruppe einen Anwesenheitssensor umfasst, welcher am Eingangsende des Transports des Entstaplers angeordnet ist.

13. System (1) nach Anspruch 1, wobei das zweite Detektionsmittel der Entstapelbaugruppe einen Anwesenheitssensor umfasst, welcher sich unter dem Sensor des ersten Detektionsmittels befindet.

14. System (1) nach Anspruch 1, wobei die dritten, vierten, sechsten und siebten Detektionsmittel der Entstapelbaugruppe jeweils einen Anwesenheitssensor umfassen, welche sich auf einer Seite der Führung des Schalenlagers befindet.

15. System (1) nach Anspruch 1, wobei das fünfte Detektionsmittel zwei Anwesenheitssensoren umfasst, welche sich in der Saugnäpfenbaugruppe jedes Stapels befinden.

## Revendications

1. Système automatique (1) pour empiler et désempiler des plateaux reçus en flux continu, comprenant :
a) un ensemble d'empilement comprenant :
- une bande transporteuse orientée longitudinalement (2) ayant une extrémité d'entrée configurée pour recevoir les plateaux (100) ;
- un empileur de plateaux (3) situé à côté d'une extrémité de sortie de la bande transporteuse (2) pour recevoir les plateaux (100), dans lequel l'empileur (3) comprend un récepteur de plateaux (31) configuré pour se déplacer verticalement vers le bas au fur et à mesure que les plateaux (100) arrivent, de telle sorte qu'il y a une pile formée sur celui-ci dans laquelle un plateau supérieur est essentiellement situé à la hauteur de l'extrémité de sortie de la bande transporteuse (2) ;
- des premiers moyens de détection configurés pour détecter le moment où l'empileur (3) est plein ou presque plein ;
- des deuxièmes moyens de détection configurés pour détecter que le récepteur (31) se trouve dans une position de réception dans laquelle le plateau supérieur de la pile de plateaux (100) est essentiellement à la hauteur de l'extrémité de sortie de la bande transporteuse (2) ; et
- un chariot de stockage de plateaux (4) configuré pour recevoir les plateaux (100) empilés dans le récepteur de plateaux (31) ; **caractérisé par**
b) un ensemble de désempilement comprenant :
- un magasin de plateaux qui se déplace verticalement ;
- une section de transport à rouleaux sur laquelle sont déchargés les plateaux ;
- un système mobile de ventouses qui collecte les plateaux ;
- des premiers moyens de détection configurés pour détecter que le magasin de plateaux du désempileur se trouve dans la position d'attente ;
- des deuxièmes moyens de détection configurés pour détecter le moment où le magasin de plateaux du désempileur est vide ;
- des troisièmes moyens de détection configurés pour détecter si la base du magasin de plateaux du désempileur a atteint la position la plus basse possible ;
- des quatrièmes moyens de détection configurés pour détecter si la base du magasin de plateaux du désempileur a atteint la position qui permet le retrait du chariot ;
- des cinquièmes moyens de détection configurés pour détecter si le magasin de plateaux s'est suffisamment déplacé vers le haut pour que le plateau supérieur de la pile entre en contact avec les ventouses ;
- des sixièmes moyens de détection configurés pour détecter si le magasin de plateaux a atteint la limite maximale de déplacement vers le haut ;
- des septièmes moyens de détection configurés pour détecter si le plateau maintenu par les ventouses n'est qu'en nombre d'un seul ; et
- un vibrateur configuré pour détacher des plateaux se chevauchant.

2. Système (1) selon la revendication 1, comprenant un mécanisme de déplacement vertical pour déplacer les piles de plateaux vers le haut ou vers le bas.

3. Système (1) selon la revendication 2, dans lequel le mécanisme de déplacement vertical comprend :
- un chariot coulissant (32) auquel sont fixés le récepteur de plateaux (31) et le dispositif de chargement de pile de plateaux ;
- un guide vertical (33) auquel est couplé de manière coulissante le chariot coulissant (32) ;
- une courroie dentée (34) disposée verticalement et reliée au chariot coulissant (32) pour provoquer son déplacement vers le haut ou vers le bas le long du guide vertical (33) ; et
- des moyens d'entraînement (35) reliés mécaniquement à la courroie dentée (34) pour provoquer le déplacement vertical de celle-ci.

4. Système (1) selon l'une quelconque des revendications 1-3, dans lequel le récepteur de plateaux (31) comprend une paire de barres de support parallèles et essentiellement longitudinales disposées pour supporter les plateaux (100).

5. Système (1) selon l'une quelconque des revendications 3-4, dans lequel les deuxièmes moyens de détection de l'ensemble d'empilement comprennent un capteur de présence supérieur et un capteur de présence inférieur disposés d'un côté de l'extrémité de sortie de la bande transporteuse (2) et orientés en horizontal perpendiculairement à la direction longitudinale, le capteur de présence supérieur étant disposé verticalement au-dessus du capteur de présence inférieur, de telle sorte que, lorsque le récepteur de plateaux (31) se trouve dans une position de réception pour recevoir un nouveau plateau (100), le capteur de présence supérieur ne détecte rien et le capteur de présence inférieur détecte un objet, tandis que, lorsque le récepteur de plateaux (31) se trouve dans une position supérieure à la position de réception du fait qu'il vient de recevoir un nouveau plateau (100) et doit descendre pour recevoir le suivant, le premier et le deuxième capteurs de présence détectent tous deux un objet.

6. Système (1) selon l'une quelconque des revendications précédentes, dans lequel les premiers moyens de détection de l'ensemble d'empilement comprennent un capteur de présence configuré pour détecter le récepteur de plateaux (31) lorsqu'il arrive à une position d'extrémité inférieure ou une position proche de celle-ci.

7. Système (1) selon l'une quelconque des revendications précédentes, dans lequel le chariot de stockage (4) de l'ensemble d'empilement est constitué d'une structure comprenant des roulettes (41) et un support (42) pour recevoir la pile de plateaux (100).

8. Système (1) selon la revendication 7, dans lequel le support (42) est couplé à la structure d'une manière verticalement coulissante, la structure comprenant en outre un ressort qui entraîne en continu le support (42) vers le haut, de telle sorte que plus le poids des plateaux (100) disposés sur le support (42) est important, plus la position du support (42) est basse.

9. Système (1) selon l'une quelconque des revendications précédentes, comprenant en outre une structure de protection (5) pourvue d'une porte (51) disposée pour empêcher les personnes d'accéder à la bande transporteuse (2) et à l'empileur (3) pendant leur fonctionnement.

10. Système (1) selon la revendication 1, dans lequel le système mobile de ventouses comprend un actionneur linéaire auquel est couplée un ensemble de ventouses chargé de saisir les plateaux situés dans la partie supérieure de la pile par le biais d'un système de vide.

11. Système (1) selon la revendication 1, dans lequel l'ensemble de désempilement comprend un vibrateur installé sur l'ensemble de ventouses pour éliminer le vide formé entre les plateaux.

12. Système (1) selon la revendication 1, dans lequel les premiers moyens de détection de l'ensemble de désempilement comprennent un capteur de présence disposé dans l'extrémité d'entrée du transport du désempileur.

13. Système (1) selon la revendication 1, dans lequel les deuxièmes moyens de détection de l'ensemble de désempilement comprennent un capteur de présence situé au-dessous du capteur des premiers moyens de détection.

14. Système (1) selon la revendication 1, dans lequel chacun les troisièmes, les quatrièmes, les sixièmes, et les septièmes moyens de détection de l'ensemble de désempilement comprennent un capteur de présence situé d'un côté du guide du magasin de plateaux.

15. Système (1) selon la revendication 1, dans lequel les cinquièmes moyens de détection comprennent deux capteurs de présence situés sur l'ensemble de ventouses de chaque pile.
